# FASCICULE DE BREVET EUROPEEN

(11) **EP 0 635 310 B1**
(45) Date de publication et mention de la délivrance du brevet: **23.04.1997**
(21) Numéro de dépôt: 94109271.0
(22) Date de dépôt: 16.06.1994
(51) Int. Cl.: B05B 1/30, F16K 5/06, A62C 31/02

(54) **Pistolet de manoeuvre pour un diffuseur de produits fluides**
Betätigungspistole für Düsen
Actuating gun for nozzles

(30) Priorité: 12.07.1993 LU 88376
(43) Date de publication de la demande: 25.01.1995
(73) Titulaire: LUXEMBOURG PATENT COMPANY S.A., 1720 Luxembourg (LU); Mersch, Patrick, F-13007 Marseille (FR)
(72) Inventeur: Kerger, Léon, L-7382 Helmdange (LU); Mersch, Patrick, F-13008 Marseille (FR)
(74) Mandataire: Meyers, Ernest

(56) Documents cités:
- GB-A- 2 239 931
- US-A- 2 557 838
- US-A- 2 820 676

## Description

La présente invention concerne un pistolet de manoeuvre pour un extincteur d'incendie comprenant un corps avec un passage longitudinal pour le produit d'extinction et un raccord pour être fixé, par l'intermédiaire d'un tuyau, sur une bouteille contenant le produit, un diffuseur de produits destiné à être vissé sur le corps, du côté opposé au raccord, un organe rotatif d'ouverture et de fermeture du passage à travers le corps et le diffuseur et une poignée de manoeuvre extérieure pour faire pivoter l'organe d'ouverture et de fermeture, dans lequel les faces frontales opposées du diffuseur et du corps comportent des parties concaves définissant un logement pour l'organe d'ouverture et de fermeture.

Quoique n'y étant pas limitée, l'invention vise plus particulièrement les extincteurs à bouteille placés, par mesure de sécurité, dans des bâtiments, véhicules, usines, locaux de commerce, lieux publics, etc.

Ces extincteurs comportent une bouteille contenant le produit d'extinction qui peut être de l'eau ou une poudre d'extinction, ainsi qu'une lance munie d'un pistolet de manoeuvre avec une valve ou robinet pour permettre la sortie du produit d'extinction enfermé, sous pression, dans la bouteille. Le premier critère imposé à ces extincteurs est d'être maniables avec rapidité, peu d'efforts et de manière efficace.

Dans la plupart des extincteurs actuellement connus, le pistolet de manoeuvre comporte un organe de fermeture sous forme d'un piston ou d'un disque qui est maintenu, par un ressort, sur un siège dans le passage du produit d'extinction. L'ouverture est réalisée contre l'action du ressort par rotation ou traction sur l'organe de fermeture.

Ces dispositifs connus présentent cependant un certain nombre d'inconvénients. L'un de ceux-ci est que l'organe de fermeture demeure, en position ouverte, dans le courant du produit d'extinction. Vu que le passage de celui-ci n'est pas complètement libéré, il y a, nécessairement, perte de pression et manque d'efficacité.

Lorsque la bouteille contient une poudre d'extinction, des dépôts éventuels de cette poudre sur le siège peuvent gêner le maintien d'une bonne étanchéité. Il faut, par conséquent, un ressort de fermeture puissant, ce qui, d'un autre côté, exige plus d'efforts pour l'ouverture.

Le document US-A-2,820,676 (cF. préambule de la revendication 1) décrit un pistolet de manoeuvre pour lances à eau. L'usage de ce pistolet est réservé à des équipements professionnels d'extinction. Il s'agit d'une vanne à trois voies avec un double diffuseur pour engendrer un jet d'eau ou un jet de brouillard. Le pistolet comporte une poignée de manoeuvre avec un système de verrouillage dans trois positions différentes. Étant donné que ce pistolet n'est pas manoeuvrable avec une seule main, il ne convient pas pour les petits extincteurs, notamment pour les extincteurs portatifs.

Le but de la présente invention est de proposer un nouveau pistolet de manoeuvre du genre décrit dans le préambule, qui est extrêmement simple, peu coûteux et maniable avec rapidité et peu d'efforts.

Pour atteindre cet objectif, le pistolet proposé par la présente invention comporte les caractéristiques énoncées dans la revendication 1.

Dans un mode de réalisation préféré, le diffuseur présente autour de sa face frontale concave une gorge circulaire annulaire pourvue d'un taraudage destiné à coopérer avec un taraudage correspondant de la jupe cylindrique du corps.

Les taraudages sont, de préférence, prévus respectivement sur la paroi extérieure de la gorge du diffuseur et sur la paroi extérieure de ladite jupe.

Selon un mode de réalisation préféré, les faces frontales opposées du diffuseur et du corps sont des cônes de révolution, de même conicité, tandis que l'élément rotatif est un boisseau sphérique coincé entre lesdits cônes.

En position fermée, un perçage diamétral du boisseau est disposé transversalement par rapport au passage à travers le corps et le diffuseur de sorte que le boisseau obstrue complètement ce passage. Par contre, en position ouverte, ce perçage se trouve dans l'alignement du passage de sorte que celui-ci est complètement libéré et permet la sortie du produit d'extinction sans perte de pression.

Étant donné que le boisseau fait, en fait, partie de la poignée, tout le pistolet ne comporte que trois pièces, à savoir le corps, le diffuseur et l'ensemble formé par la poignée et le boisseau. Ces pièces sont, en outre, très facilement démontables par un simple dévissage du diffuseur, ce qui facilite l'entretien. Ces trois pièces peuvent, en outre, être réalisées en matière plastique, ce qui réduit leur coût de fabrication.

L'étanchéité entre le boisseau et les surfaces coniques est réalisée par le serrage du diffuseur sur le corps. Pour améliorer l'étanchéité et éviter de devoir serrer le diffuseur trop fort sur le corps, il est possible de prévoir des joints d'étanchéité toriques dans chacune des surfaces coniques au niveau du contact avec le boisseau.

D'autres particularités et caractéristiques qui ressortiront de la description d'un mode de réalisation préféré, présenté ci-dessous, à titre d'exemple non limitatif, en référence aux figures annexées dans lesquelles :
la figure 1 montre une vue en coupe longitudinale du pistolet en position fermée;
la figure 2 montre une vue analogue du pistolet en position ouverte :
la figure 3 montre une vue en coupe longitudinale du corps du pistolet et
la figure 4 montre une vue en perspective de la poignée et de l'organe de fermeture.

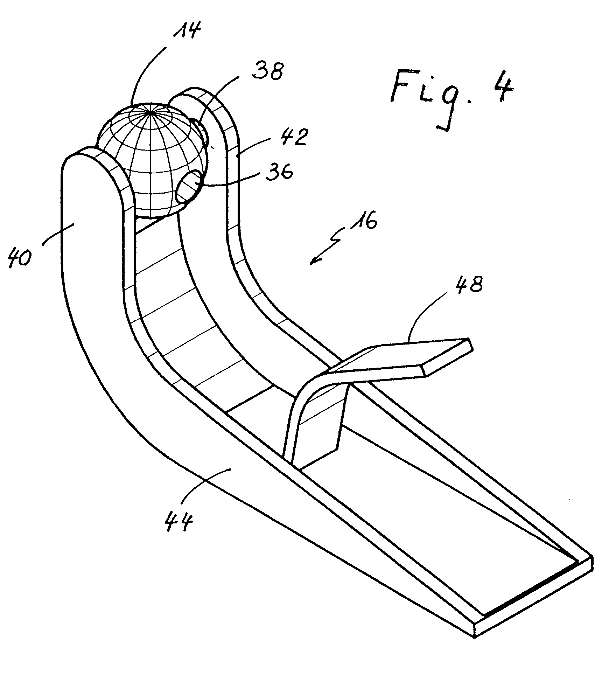

Le pistolet faisant l'objet de la présente invention ne comporte, dans son mode de réalisation préféré, que trois pièces, à savoir, un corps 10, un diffuseur 12 et un organe d'ouverture et de fermeture 14 qui fait partie intégrante d'une poignée de manoeuvre 16 comme représenté sur la figure 4. Toutes ces pièces peuvent être réalisées en matière plastique, ce qui réduit leur coût de fabrication.

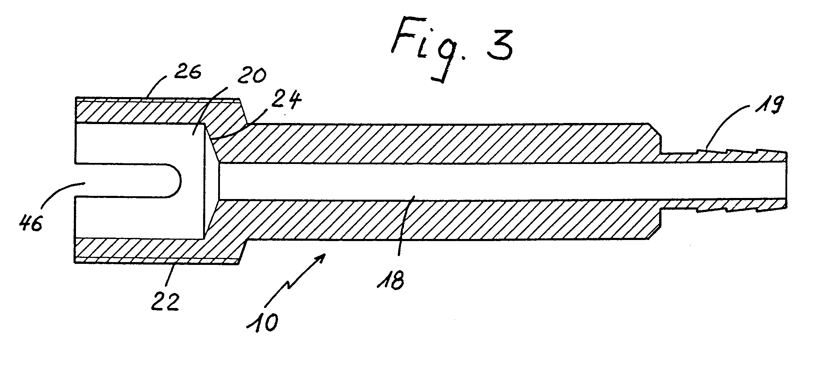

Le corps 10, isolé sur la figure 3, est une pièce allongée de forme généralement cylindrique, traversée de part et d'autre, par un canal longitudinal 18 pour le passage du produit d'extinction. Le corps 10 est prolongé à l'une de ces extrémités par un raccord 19 lui permettant d'être connecté, généralement par l'intermédiaire d'un tuyau flexible, non représenté, sur une bouteille renfermant le produit d'extinction sous pression. A l'extrémité opposée au raccord 19, le corps 10 présente une cavité cylindrique 20 entourée par une jupe cylindrique périphérique 22 formant le prolongement longitudinal du corps 10. Le fond de cette cavité 20 entourant le canal 18 est une surface annulaire concave 24, dans l'exemple représenté, une surface conique de révolution. La partie terminale de la surface extérieure de la jupe 22 est pourvue d'un taraudage 26.

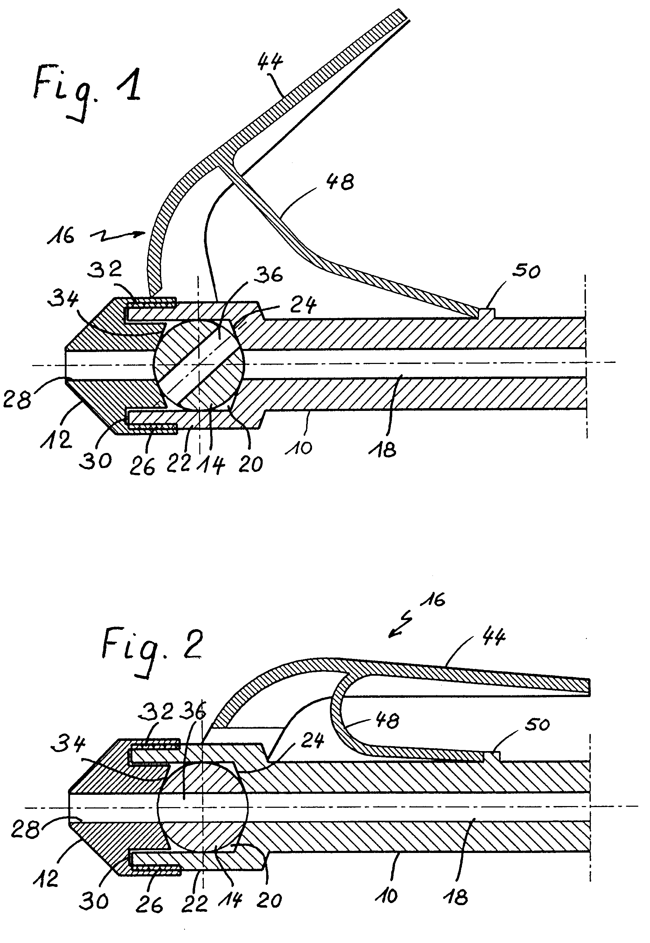

Le diffuseur 12 est une sorte de capuchon conçu pour être vissé sur la jupe 22 du corps 10, comme représenté sur les figures 1 et 2. Le diffuseur 12 est traversé par un canal 28 aligné sur le canal 18 du corps 10. Le canal 28 peut être cylindrique, de même section que le canal 18 ou être légèrement divergent en direction de la sortie.

Le diffuseur 12 comporte une gorge cylindrique annulaire 30 dont la largeur correspond approximativement à l'épaisseur de la jupe 22 et dont la paroi extérieure est pourvue d'un taraudage 32 complémentaire au taraudage 26 de la jupe 22 de façon à pouvoir être vissé sur celle-ci.

La surface radiale annulaire 34 entre la gorge 30 et le canal 28 est une surface concave, en l'occurrence une surface conique, de préférence, mais pas nécessairement, de même conicité que la surface conique 24 du corps 10.

Lorsque le diffuseur 12 est vissé sur le corps 10, la cavité 20 délimitée radialement par la jupe 22 et latéralement par les surfaces coniques 24 et 34 forme le logement de l'organe d'ouverture et de fermeture 14. Celui-ci est, dans l'exemple représenté, un boisseau sphérique de même diamètre que le diamètre intérieur de la jupe 22. Ce boisseau 14 comporte un perçage diamétral 36 dont la section correspond, de préférence, à la section du canal 18. Suivant l'orientation du boisseau 14 et de son perçage 36 le pistolet est fermé (figure 1) ou ouvert (figure 2). Autrement dit, la manoeuvre du pistolet en vue de son ouverture consiste simplement en une rotation du boisseau d'environ 45° de la position de la figure 1 vers celle de la figure 2.

Il y a lieu de noter que dans le mode de réalisation représenté et dans la position ouverte de la figure 2, le perçage 36 est parfaitement aligné sur les canaux 18 et 28 du corps 10 et du diffuseur 12, de sorte que le passage du produit d'extinction est tout-à-fait libéré.

L'étanchéité entre le boisseau 14, d'une part, et le corps 10 et le diffuseur 12, d'autre part, est simplement obtenue en vissant le diffuseur suffisamment fort sur le corps 10. Il est également possible de prévoir dans les surfaces coniques 24, 34, au niveau du contact avec le boisseau 14, des joints toriques non représentés. De tels joints ont l'avantage de permettre un serrage moins fort du diffuseur 12 sur la jupe 22 et de faciliter la manoeuvre du pistolet en réduisant la force nécessaire à la rotation du boisseau 14.

Les arêtes aiguës à l'intersection des canaux 18 et 28, d'une part, et des surfaces coniques 24, et 34, d'autre part, font, lors de la rotation du boisseau 14, office de racloir, si bien que, lorsque le produit d'extinction est de la poudre, des dépôts éventuels de celle-ci sur la surface du boisseau 14 sont enlevés automatiquement par la rotation de celui-ci et ne risquent pas de perturber l'étanchéité.

Selon un autre aspect intéressant de l'invention, le boisseau 14 forme, comme représenté sur la figure 4, partie intégrante d'une poignée de manoeuvre 16, de sorte que toute la pièce illustrée sur la figure 4 peut être fabriquée en une seule opération de moulage.

Le boisseau est porté par un arbre transversal 38 dont les extrémités opposées sont solidaires de deux pattes 40, 42, s'étendant à partir du manche 44 de la poignée 16. La jupe 22 du corps 10 présente, comme le montre la figure 3, deux fentes 46 diamétralement opposées, d'une largeur approximativement égale au diamètre de l'arbre 38. Le fond de chacune de ces fentes 46 forme le palier de logement de l'arbre 38.

La poignée 16 du pistolet est pourvue d'un ressort pour maintenir le pistolet dans la position fermée de la figure 1. Ce ressort est une lame flexible 48 qui, comme représenté sur la figure 1, s'étend obliquement du manche 44 de la poignée 16 et fait partie de celui-ci. L'extrémité de cette lame peut prendre appui derrière une butée 50 prévue sur le corps 10, de sorte que, lors de l'ouverture du pistolet par pivotement de la poignée 16, la lame 48 se replie élastiquement sur elle-même pour venir occuper la position de la figure 2.

Le montage et le démontage du pistolet sont extrêmement simples et faciles. Le dévissage du diffuseur 12 permet une séparation immédiate des trois seules pièces constituant le pistolet et un accès facile à toutes les parties en vue d'un entretien éventuel.

La forme sphérique du boisseau n'est qu'un exemple illustratif. Il est, par exemple, possible de prévoir un organe d'obturation en forme de cylindre. Dans ce cas les surfaces coniques du diffuseur et du corps ne seraient pas des surfaces de révolution, mais des surfaces coniques transversales droites. Le perçage du cylindre pourrait également être un perçage diamétral comme celui que présente le boisseau sphérique décrit ci-dessus. Le perçage diamétral pourrait toutefois être remplacé par une rainure tangentielle du cylindre dont la section maximale correspondrait à la section du canal dans le corps du pistolet, le cylindre étant dans ce cas, désaxé par rapport à l'axe du dit canal. Par ailleurs, il y a lieu de rappeler que, si l'invention a été décrite dans le cadre de son application préférée, elle n'est nullement limitée à celle-ci.

## Revendications

1. Pistolet de manoeuvre pour un extincteur d'incendie comprenant un corps (10) avec un passage longitudinal (18) pour le produit d'extinction et un raccord (19) pour être fixé, par l'intermédiaire d'un tuyau, sur une bouteille contenant le produit, un diffuseur (12) de produits destiné à être vissé sur le corps (10), du côté opposé au raccord (19), un organe rotatif d'ouverture et de fermeture du passage à travers le corps (10) et le diffuseur (12) et une poignée de manoeuvre extérieure (16) pour faire pivoter l'organe d'ouverture et de fermeture (14), dans lequel les faces frontales opposées du diffuseur (12) et du corps (10) comportent des parties concaves (34) (24) définissant un logement pour l'organe d'ouverture et de fermeture (14) caractérisé en ce que l'organe d'ouverture et de fermeture (14) et la poignée de manoeuvre extérieure (16) sont constitués par une pièce monobloc en matière plastique avec un arbre transversal (38) logé dans des paliers formés par le fond de deux fentes ouvertes opposées (46) d'une jupe cylindrique (22) formant un prolongement longitudinal du corps (10) autour d'une de ses parties concaves (24) et en ce que ladite pièce monobloc comporte une lame flexible (48) s'étendant obliquement du manche (44) de la poignée (16) en s'appuyant sur la paroi extérieure du corps (10) pour solliciter la poignée (16) vers la position fermée.

2. Pistolet selon la revendication 1, caractérisé en ce que le diffuseur (12) et le corps (10) sont en matière plastique.

3. Pistolet selon la revendication 1, caractérisé en ce que le diffuseur (12) présente, autour de sa face frontale concave, une gorge annulaire (30) pourvue d'un taraudage (32) destiné à coopérer avec un taraudage correspondant (26) de la jupe cylindrique (22) du corps (10).

4. Pistolet selon la revendication 3, caractérisé en ce que les taraudages (32), (26) sont prévus respectivement sur la paroi extérieure de la gorge (30) du diffuseur (12) et sur la paroi extérieure de ladite jupe (22).

5. Pistolet selon la revendication 1, caractérisé en ce que les faces frontales opposées du diffuseur (12) et du corps (10) sont des cônes de révolution (34), (24) de même conicité et en ce que ledit élément rotatif est un boisseau sphérique (14) coincé entre lesdits cônes.

## Claims

1. Operating trigger for a fire extinguisher, comprising a body (10) with a longitudinal passage (18) for the extinguisher product and a connection piece (19) to be fixed, by way of a hose, to a canister containing the product, a product sprayer (12) intended to be screwed onto the body (10), on the opposite side from the connection piece (19), a rotary member for opening and closing the passage through the body (10) and the sprayer (12), and an external operating lever (16) for pivoting the opening and closing member (14), in which the opposing frontal faces of the sprayer (12) and of the body (10) include concave parts (34) (24) defining a seat for the opening and closing member (14), characterized in that the opening and closing member (14) and the external operating lever (16) are made up of a monobloc plastic component with a transverse shaft (38) lodged in bearings formed by the bottom of two opposite and open slots (46) of a cylindrical skirt (22) forming a longitudinal continuation of the body (10) around one of its concave parts (24), and in that the said monobloc component includes a flexible strip (48) extending obliquely from the handle (44) of the lever (16) and bearing on the outer wall of the body (10) in order to stress the lever (16) towards the closed position.

2. Trigger according to Claim 1, characterized in that the sprayer (12) and the body (10) are made of plastic.

3. Trigger according to Claim 1, characterized in that the sprayer (12) has, around its concave frontal face, an annular groove (30) provided with a screw thread (32) intended to cooperate with a corresponding screw thread (26) of the cylindrical skirt (22) of the body (10).

4. Trigger according to Claim 3, characterized in that the screw threads (32), (26) are provided, respectively, on the outer wall of the groove (30) of the sprayer (12) and on the outer wall of the said skirt (22).

5. Trigger according to Claim 1, characterized in that the opposing frontal faces of the sprayer (12) and of the body (10) are cones of revolution (34), (24) of the same conicity, and in that the said rotary element is a ball valve (14) wedged between the said cones.

## Patentansprüche

1. Betätigungspistole für Feuerlöschgeräte mit einem Gehäuse (10), das einen Längskanal (18) für das Feuerlöschmittel und einen Anschluss (19) zur Verbindung mittels eines Schlauchs mit einer, das Feuerlöschmittel enthaltenden Flasche aufweist, einem Zerstäuber (12) des Löschmittels der auf der dem Anschluss (19) entgegengesetzte Seite auf das Gehäuse (10) aufschraubbar ist, einem drehbaren Organ zur Öffnung und Schliessung des Kanals durch das Gehäuse (10) und den Zerstäuber (12) und einem äusseren Handgriff (16) zum Drehen des Öffnungs-und Schliessorgans (14), wobei die sich gegenüberliegenden Stirnseiten des Zerstäubers (12) und des Gehäuses (10) konkave Teile (34, 24) enthalten, welche eine Lagerung des Öffnungs-und Schliessorgans (14) begrenzen, dadurch gekennzeichnet, dass das Öffnungs-und Schliessorgan (14) und der äussere Betätigungshandgriff (16) aus einem einheitlichen Bauteil aus Plastikmaterial bestehen mit einer Querwelle (38) die in Lagern aufgenommen ist, welche vom Boden von zwei entgegengesetzten offenen Nuten (46) in einem zylindrischen Mantel (22) gebildet sind, der die longitudinale Verlängerung des Gehäuses (10) um seine konkaven Teile (24) bildet, und dass dieser einheitliche Bauteil eine biegsame Zunge (48) aufweist, welche sich schief vom Hebel (44) des Handgriffs (16) erstreckt und sich an der Aussenwand des Gehäuses (10) abstützt, um den Handgriff (16) in die geschlossene Stellung zu drücken.

2. Pistole gemäss Anspruch 1, dadurch gekennzeichnet, dass der Zerstäuber (12) und das Gehäuse (10) aus Plastikmaterial bestehen.

3. Pistole nach Anspruch 1, dadurch gekennzeichnet, dass der Zerstäuber (12) um seine konkave Stirnseite eine kreisförmige, ringförmige Pille (30) aufweist, mit einem Gewinde (32), das dazu bestimmt ist, mit einem entsprechenden Gewinde (26) am zylindrischen Mantel (22) des Gehäuses (10) zusammenzuwirken.

4. Pistole nach Anspruch 3, dadurch gekennzeichnet, dass die Gewinde (32), (36) an der Aussenwand der Pille (30) des Zerstäubers (12) bzw. an der Aussenwand des Gehäusemantels (22) vorgesehen sind.

5. Pistole nach Anspruch 1, dadurch gekennzeichnet, dass die entgegengesetzten Stirnseiten des Zerstäubers (12) und des Gehäuses (10) Kreiskegelflächen (34), (24) mit derselben Steigung sind und dass das drehbare Organ aus einem kugelförmigen Hahnküken (14) besteht, das zwischen den genannten Kugelflächen eingeklemmt ist.
